# EUROPÄISCHE PATENTSCHRIFT

Europäisches Patentamt

European Patent Office

Office européen des brevets

(19)

(11) Veröffentlichungsnummer : **0 309 658 B1**

(12)

(45) Veröffentlichungstag der Patentschrift :
**05.06.91 Patentblatt 91/23**

(51) Int. Cl.⁵ : **D03D 11/00**

(21) Anmeldenummer : **88110602.5**

(22) Anmeldetag : **02.07.88**

(54) **Aus Mehrlagengewebe bestehender Vor-Formling.**

(30) Priorität : **18.04.88 DE 3812909**
**26.09.87 DE 3732555**

(43) Veröffentlichungstag der Anmeldung :
**05.04.89 Patentblatt 89/14**

(45) Bekanntmachung des Hinweises auf die
Patenterteilung :
**05.06.91 Patentblatt 91/23**

(84) Benannte Vertragsstaaten :
**AT BE CH DE ES FR GB GR IT LI LU NL SE**

(56) Entgegenhaltungen :
**EP-A- 0 056 351**
**EP-A- 0 131 855**

(73) Patentinhaber : **Vorwerk & Co. Interholding
GmbH
Mühlenweg 17-37 Postfach 20 16 11
W-5600 Wuppertal 2 (DE)**

(72) Erfinder : **Böttger, Wolfgang
Am Künzacker 1
W-8651 Ködnitz (DE)**
Erfinder : **Biedermann, Kurt
Frankenleite 18
W-8650 Kulmbach (DE)**

(74) Vertreter : **Müller, Enno et al
Rieder & Partner Corneliusstrasse 45
W-5600 Wuppertal 11 (DE)**

**Beschreibung**

Die Erfindung bezieht sich auf einen aus einem Mehrlagengewebe bestehenden Vor-Formling gemäß Oberbegriff des Anspruchs 1.

Ein Mehrlagengewebe dieser Art ist durch die europäische Patentanmeldung 0 056 351 bekannt. Es findet Einsatz zur Herstellung faserverstärkter Kunststoff-Verbundkörper. Die Gewebeschenkel lassen sich unter Realisierung der verschiedensten Profile ausrichten ; dies gilt analog für den Steg.

Aufgabe der Erfindung ist es, ein gattungsgemäßes Mehrlagengewebe für Vor-Formlinge anzugeben, das bei vereinfachter Herstellung eine erhöhte Festigkeit bringt zufolge der Innenstruktur des Mehrlagengewebes.

Gelöst ist diese Aufgabe durch die im Kennzeichen des Hauptanspruches angegebene Erfindung.

Die Unteransprüche verkörpern vorteilhafte Weiterbildungen.

Zufolge solcher Ausgestaltung entsteht eine feste Gewebestruktur. Vor allem die Spaltwurzel fällt stabil aus. Es finden keine Gewebeverzerrungen beim Kunststoffeinbetten statt. Das Formen wird besser beherrschbar. Trotzdem sind die Webbedingungen einfach.

Nachteilig am erläuterten Vor-Formling ist auch, daß die Gewebeschenkel als echte Stegteiler entsprechend nur die halbe Stegdicke aufweisen. Dort wird dieser Profildickenverlust in aufwendiger Weise durch Beigabe von Verstärkungsleisten kompensiert. Solche separaten Leisten bilden naturgemäß Schwachstellen, da ihr Gewebeverbund zum Mehrlagengewebe des Vor-Formlings fehlt.

Diesem Nachteil ist gemäß Weiterbildung nach Anspruch 2 einfach dadurch begegnet, daß im Bereich der Gewebeschenkel die Schußfäden jeweils doppellagig angeordnet sind oder aus doppelt so starkem bzw. den Erfordernissen entsprechend starkem Schußmaterial bestehen.

Zufolge solcher Ausgestaltung ist ein Mehrlagengewebe geschaffen, bei dem die Gewebeschenkel und der Gewebesteg annähernd gleiche Dicke aufweisen, ohne daß zu diesem Zweck Ergänzungsgewebebeilagen beizufüttern wären. Enstprechend günstig fällt auch die Verteilung des Fasermaterial-Anteils am fertigen Kunststoff-Verbundkörper aus. Natürlich ist die Anzahl der Schußfäden oder die Dicke (Stärke) des Schußmateriales unter Erzielung bestimmter Sonderformen partiell variierbar. Z.B. könnte in der unmittelbaren Umfaltzone die Anzahl oder Dicke reduziert werden, um zu einer faltfreudigeren Ausgestaltung zu kommen, insbesondere eine Wellung an den Innenecken zwischen Gewebeschenkel und Gewebesteg zu vermeiden. Wie gefunden, bringt die Doppellagigkeit der Schußfäden oder die entsprechende Materialanhäufung auch keinerlei Schwierigkeiten bei der Tränkung, zumal dies meist in einer Unterdruck aufweisenden Form geschieht ; hierbei kann man Lufteinschlüsse praktisch restfrei evakuieren. Das Gewebe läßt sich aus technischen Fasern, wie Glas, Polygarnen, Kohlenstoff etc. herstellen. Während die Steherfäden im spaltbildenden Bereich als hälftige Schargruppe je in einen Gewebeschenkel weiterlaufen, ist gemäß einem weiteren vorteilhaften Vorshlag der Erfindung so vorgegangen, daß die Steherfäden (Grundkettfäden) der linken Hälfte des Gewebesteges im Ansatzbereich des Spaltes, auf die rechte Seite des Gewebesteges überwechselnd, in den rechten Gewebeschenkel laufen und umgekehrt. Hieraus ergibt sich eine äußerst einreißgeschützte, übergreifende Stegteilung. Das Stegmaterial wird dadurch unter Bildung einer Art Umlenkkante durch die jeweilige Gegenseite abgestützt. Das Ganze geschieht in einem nicht spaltend wirkenden Bogenverlauf der Steherfäden. Endlich bringt die Erfindung noch in Vorschlag, daß im Bereich des Gewebesteges ebenfalls ein mittelständiger Spalt eingewebt ist, welcher beiderends verschlossen ist durch die vom Gewebeabschnitt der einen Seite auf den Gewebeabschnitt der jeweils anderen Seite umtretenden Kettfäden. Unter Beibehaltung des vorteilhaften Seitenwechsels zur Schaffung der Übergreif-Übergänge wird diese Abschlußsperre der nach außen offenen Spalte genutzt als Begrenzung des mittelständigen Spalts des Gewebesteges. So entsteht praktisch im Herzen des Doppel-T-Profil-Verbundkörpers ein Kastenprofil hoher innerer Stabilität und homogener Armierung.

Der Gegenstand der Erfindung ist nachstehend anhand dreier zeichnerisch veranschaulichter Ausführungsbeispiele näher erläutert. Es zeigt

Fig. 1 einen Abschnitt eines Mehrlagengewebes in perspektivischer Darstellung, gemäß dem ersten Ausführungsbeispiel,

Fig. 2 eine Stirnansicht dieses Mehrlagengewebes bei abgewinkelten Gewebeschenkeln unter Bildung eines Doppel-T-Profils,

Fig. 3 dasselbe als Kunststoff-Verbundkörper, gegenüber Fig. 2 vergrößert,

Fig. 4 ein weitestgehend schematisiertes Webebild des Mehrlagengewebes,

Fig. 5 eine schematische Darstellung der V-förmigen Stegteilung,

Fig. 6 eine schematische Darstellsung einer übergreifenden Stegteilung, und zwar gemäß dem zweiten Ausführungsbeispiel,

Fig. 7 das zugehörige Webebild,

Fig. 8 eine Stirnansicht eines Mehrlagengewebes gemäß dem dritten Ausführungsbeispiel, mit hohlem Gewebesteg,

Fig. 9 die gleiche Stirnansicht, jedoch bei abgewinkelten Gewebeschenkeln unter Bildung eines Doppel-T-Profils,

Fig. 10 einen Abschnitt des entsprechenden Kunststoff-Verbundkörpers,

Fig. 11 das zugehörige Webebild und

Fig. 12 ein abgewandeltes Webebild, das dritte Ausführungsbeispiel verkörpernd.

Der aus einem Mehrlagengewebe gebildete bandförmige Vor-Formling V besitzt webtechnisch erzeugte, zu beiden Schmalrändern hin offene Spalten 1. Diese erstrecken sich in der Längsmittelebene E-E des Bandes und sind von gleicher Tiefe.

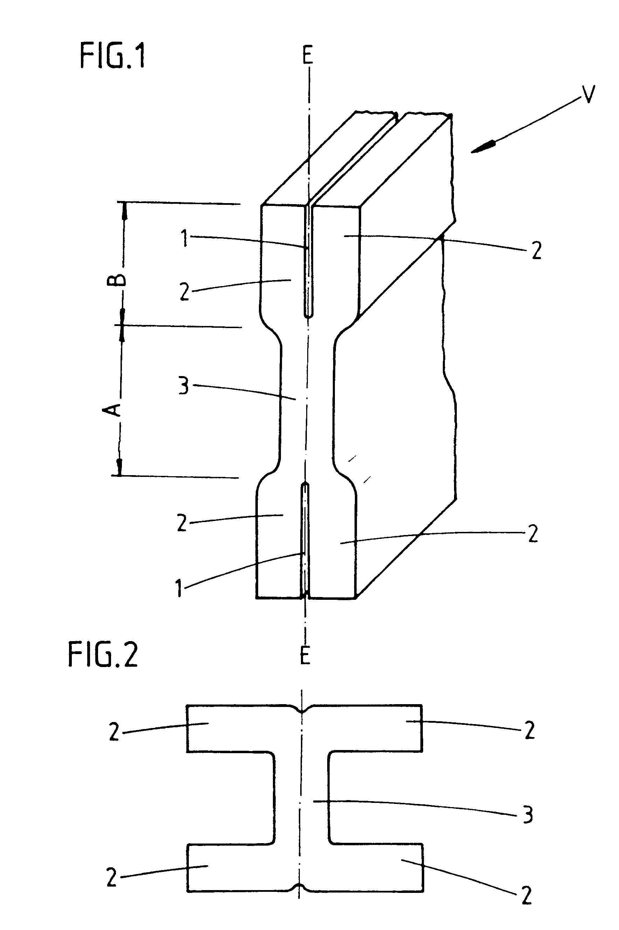

Der Spalt 1 führt zur Bildung jeweils zweier voneinander unabhängig umfaltbarer Gewebeschenkel 2. Letztere lassen sich aus der parallelen Erstreckungslage zur Ebene E-E geneigt oder senkrecht zu dieser Ebene falten. Bspw. läßt sich so das aus Fig. 2 ersichtliche Doppel-T-Profil erreichen. Hier liegen die 90° abgefalteten Gewebeschenkel 2 in horizontaler Parallellage zueinander.

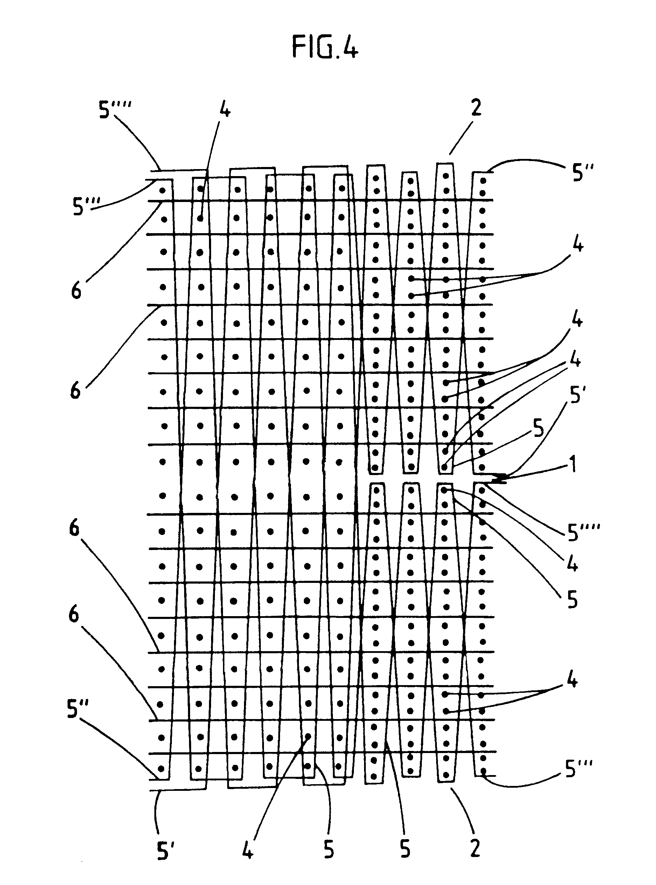

Die Gewebeschenkel 2 und der sie verbindende Gewebesteg 3 sind im wesentlichen von gleicher Dicke. Erreicht ist dies dadurch, daß das Mehrlagengewebe im Bereich der Gewebeschenkel 2 die doppelte Anzahl an Schußfäden 4 gegenüber der Anzahl im Bereich des Gewebesteges 3 besitzt. Eine solche Materialanhäufung führt zu einem entsprechenden Auftragen dieser Webezonen und einer damit zusammenhängenden größeren Kettfadenlänge, wie dies aus den Fig. 1 und 2 erkennbar ist. Aus Gründen der deutlicheren Übersicht ist beim Webbild (Fig. 4) die entsprechende räumliche Verdickung der Gewebeschenkel 2 nicht wiedergegeben.

Aus besagtem Bild ist auch der Spalt 1 erkennbar, welcher dadurch erreicht ist, daß dort die Kettfäden 5 um mittelständige Schußfäden 4 umtreten, also nicht, wie bei dem den Gewebesteg 3 bildenden Abschnitt A, durch die gesamte Gewebedicke des Meherlagengewebes laufen.

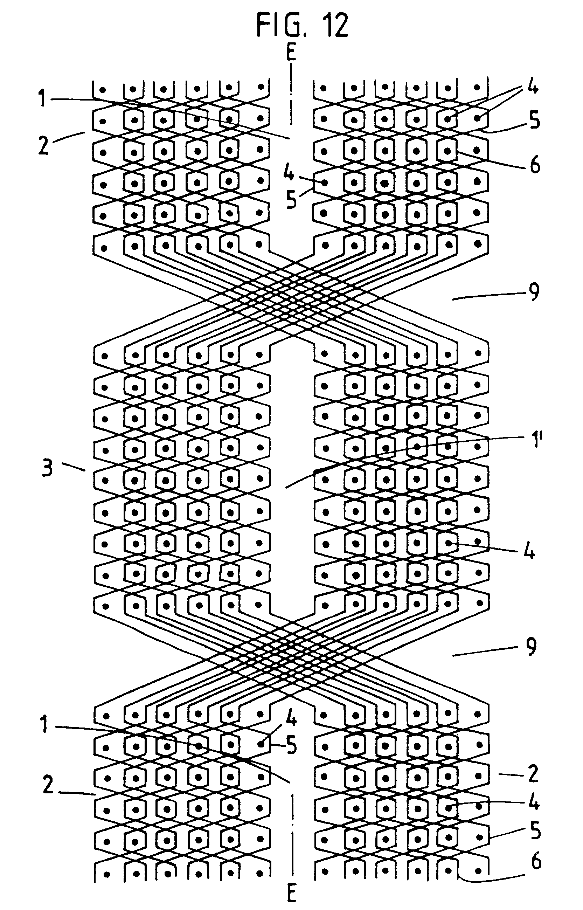

Parallel zu den Breitseiten des Webbandes erstrecken sich über die gesamte Gewebedicke die einzelnen Lagen der das Mehrlagengewebe einbindenden Steher- oder Grundkettfäden 6. Letztere können flottierend verlaufen, oder, je nach Webart, zur Abstandsbildung der einzelnen Lagen ein- oder mehrmals eingebunden werden, umzu einem durchbrechungsreicheren Gewebegerüst zu kommen (vgl. Fig. 12).

Die Steherfäden 6 verlaufen im stegbildenden Abschnitt A zwi- schen den Einzel-Schußfäden 4 und im die Gewebeschenkel 2 bildenden Abschnitt B zwischen den jeweils paarig angeordneten Schußfäden 4. Dabei teilen sich die Enden des Gewebesteges 3, indem sich das Gewebe an der "Naht" praktisch V-förmig spreizt. Die eine Hälfte der Steherfäden 6 geht in den in dieser gleichen Hälfte wurzelnden Gewebeschenkel 2 weiterlaufend über und die der anderen Hälfte in den diesbezüglichen Gewebeschenkel 2. Die Teilungsgrenze liegt in der Längsmittelebene E-E. Im Bereich der Längsmittelebene E-E liegt eine doppellagige Schußfaden-Einbindung vor. So ergibt sich bei einer geraden Anzahl an Schußfäden 4 im Stegbereich ein symmetrischer Aufbau.

Unter Berücksichtigung der Webkonzeption gemäß Fig. 4 gehen die in Fig. 4 links unten beginnenden Bindekettfäden 5' und 5" in den rechts oben liegenden Gewebeschenkel 2 über und die links oben beginnenden Bindekettfäden 5"und 5"" in den rechts unten liegenden oder umgekehrt. Der kreuzende Lagenübertritt geschieht jeweils in der Gewebeschenkel-Mitte bzw. in der Stegschenkel-Mitte.

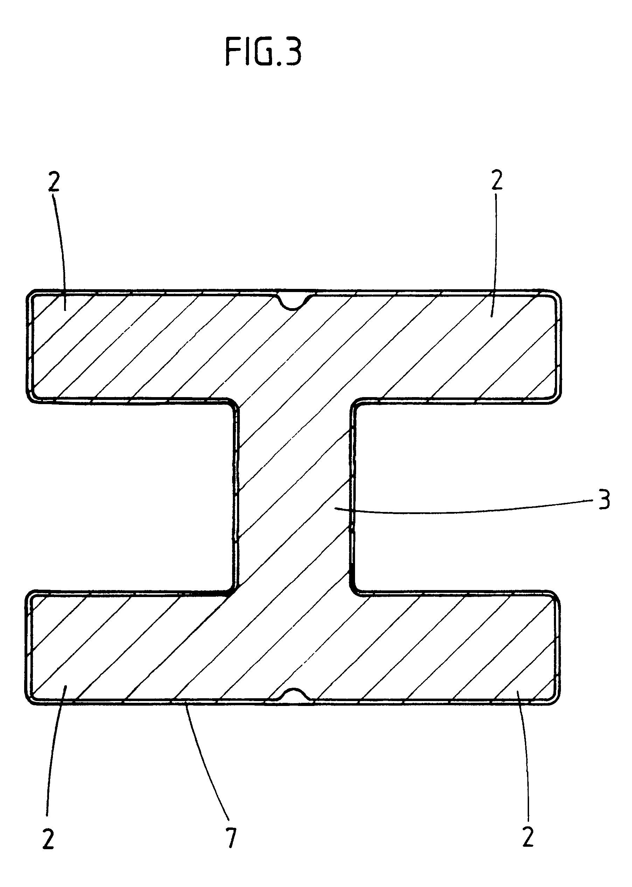

Der fertige Kunststoff-Verbundkörper ergibt sich aus Fig. 3. Der Mehrlagengewebe-Vor-Formling V ist dort völlig eingebettet, so daß der Kunststoff die Mantelfläche bildet. Die äußere Schicht des im gesamten Mehrlagengewebe wurzelnden bzw. dieses durch und durch tränkenden, ausgehärteten Kunststoffes ist mit 7 bezeichnet.

Das Mehrlagengewebe gemäß dem zweiten Ausführungsbeispiel ist, was den Dickenausgleich der Gewebeschenkel betrifft, prinzipiell gleichen Aufbaues. Lediglich der Wurzelbereich zwischen Gewebesteg 3 und den anschließenden Gewebeschenkeln 2 weicht bindungstechnisch ab. Die Bezugsziffern sind, soweit Übereinstimmung vorliegt, sinngemäß angewandt, ohne jedoch den Text in allen Fällen zu wiederholen.

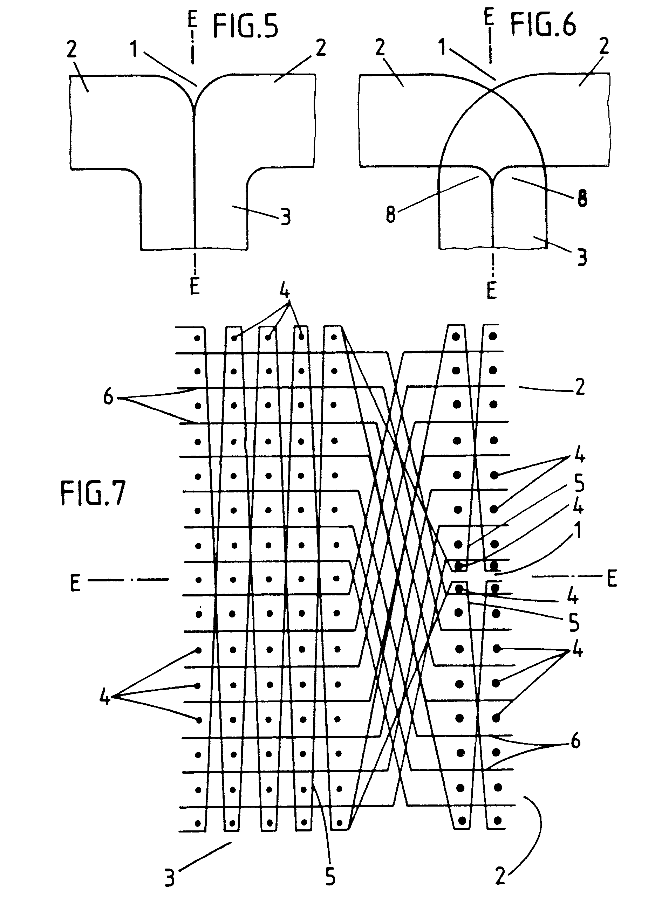

Fig. 5 (erstes Ausführungsbeispiel) gibt, auf die als Symmetrie anzusehende Längsmittelebene E-E bezogen, in schematischer Darstellung die Aufteilung des Steges 3 in eine rechte und linke Hälfte wieder. Dort spalten sich also die hälftigen Scharen der Steherfäden 6, um sich in die Gewebeschenkel 2 fortzusetzen.

In der schematischen Darstellung nach Fig. 6 (zweites Ausführungsbeispiel) ist dagegen eine Stegteilung dahingehend vorgenommen, daß die Steherfäden 6 (Grundkettfäden) der linken Hälfte des Gewebesteges 3 im Ansatzbereich des Spaltes 1, ganz auf die rechte Seite des Gewebesteges 3 überwechselnd, in den rechten Gewebeschenkel 2 laufen. Entsprechend gehen die Steherfäden 6 der rechten Hälfte des Gewebesteges 3 im Ansatzbereich des Spaltes 1, auf die linke Seite des Gewebesteges 3 überwechselnd, in den linken Gewebeschenkel 2 über. Der entsprechende Wechsel führt zu einem übergreifenden Ansatz der Gewebeschenkel 2. Die Steherfäden 6 laufen in einem relativ großzügigen Bogen in die jeweilige Schenkelseite über. Nicht ein divergierender Spaltansatz ist so erreicht, sondern ein im Wurzelbereich konvergierender Übergang mit dem Effekt, daß sich die eine Schar der Steherfäden 6 auf der einen Stegschulter 8 abstützt und umgekehrt. Es ergibt sich ein Bündelungseffekt im Wurzelbereich bzw. Kreuzungsbereich von Gewebesteg 3 und den Gewebeschenkeln 2. Scharfe Knicke sind vermieden. Diese Armierung des fertigen Kunststoff-Verbundkörpoers erweist sich als besonders günstig.

Wie dem Webebild gemäß Fig. 7 entnehmbar, ist der Übergangsbereich zwischen Gewebesteg 3 und den Gewebeschenkeln 2 aus Gründen der Deutlichkeit etwas auseinandergezogen, um den Fadenverlauf besser erkennen zu können. Da dort im übrigen eine ungerade Anzahl an Schußfäden 4 zugrundeliegt, entfällt die doppellagige Einbindung im Bereich der Längsmittelebene E-E, wie sie sich aus Fig. 4 ergibt. Statt einer Doppellagigkeit der Schußfäden 4 im gewebeschenkelbildenden Abschnitt B ist dort die doppelte Dicke bzw. eine den Erfordernissen entsprechend starke Schußmaterialdicke angewandt und optisch durch eine deutliche, etwas übertriebene Punktverdickung kenntlich gemacht.

Ansonsten ergibt sich aus diesem Webebild auch der seitenwechselnde Verlauf der Bindekettfäden 5.

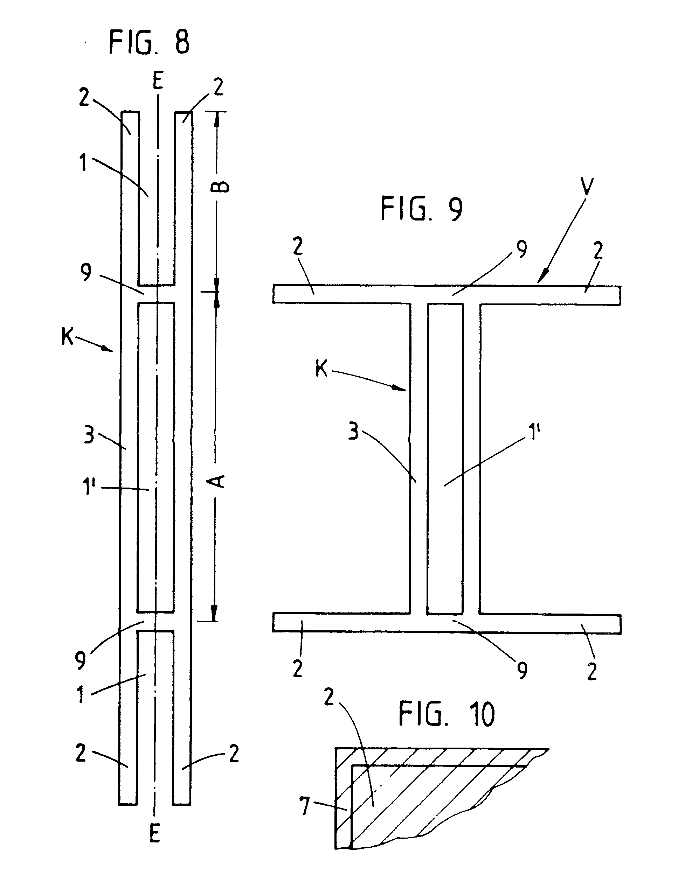

Die durch die Fig. 8 bis 12 verkörperte dritte Ausführungsform unterscheidet sich im wesentlichen von den vorbeschriebenen dadurch, daß im Bereich des Gewebesteges 3 ebenfalls ein mittelständiger Spalt 1′ eingewebt ist. Dieser Spalt 1′ ist jedoch beiderends geschlossen. Der nun doppellagige Gewebesteg 3 bildet zusammen mit seinen beabstandet parallelverlaufenden Stegwänden und den quer dazu liegenden Schenkelabschnitten 9 ein zentralliegendes Kastenprofil K. In Auswärtserstreckung der horizontal verlaufenden Schenkelabschnitte 9 setzen in gleicher Wandungsdicke wie die Stegwände die Gewebeschenkel 2 an. Deren in ausladender Richtung gemessene Länge entspricht etwa der halben Höhe des doppelwandigen Gewebesteges 3.

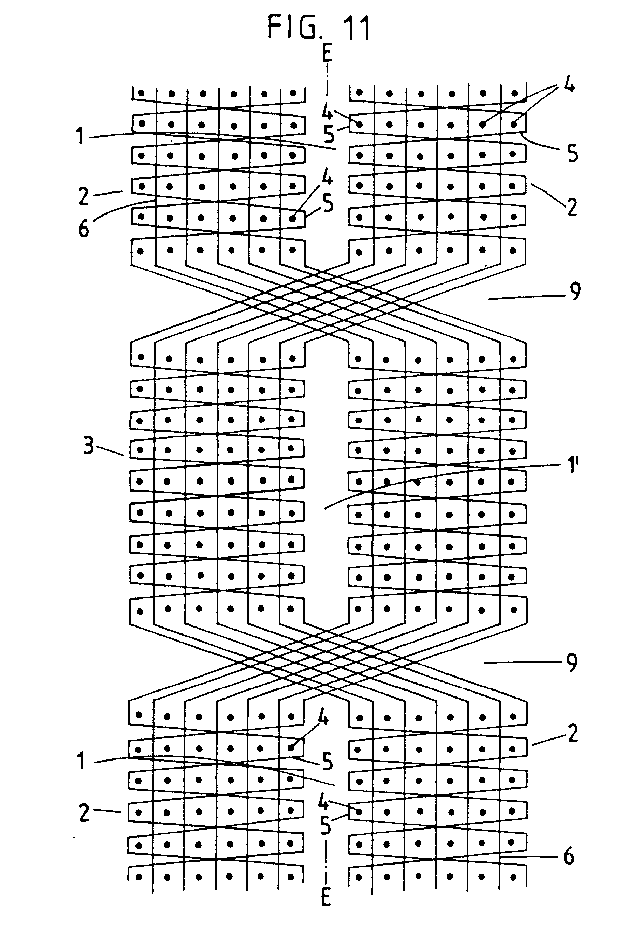

Das webtechnisch bewirkte Schließen des mittelständigen Gewebesteg-Spalts 1′ ist erreicht durch die vom Gewebeabschnitt der einen Seite auf den Gewebeabschnitt der jeweils anderen Seite umtretenden Schar der Kettfäden (Steher- oder Grundkettfäden) 6 plus Bindekettfäden 5. Dieser kreuzende Übertritt führt also zu einem Verlauf dahingehend, daß die die Gewebeschenkel 2 mitbildenden Fäden mit ihren Enden die beiden Gewebeschenkel 2 auf der einen Seite der Längsmittelebene E-E des Bandes oder des Profils erzeugen und die dieser Seite abgewandte Wandung des Gewebesteges 3 und umgekehrt. Webtechnisch ist der entsprechende Übertritt deutlich aus dem Webebild gemäß Fig. 11 erkennbar. Die Bezugszeichen sind, soweit zum Verständnis erforderlich, angewandt, ohne jedoch auf textliche Wiederholungen zurückzugreifen. Dieses Webebild ist mit Fig. 7 vergleichbar, nur daß gegenüber Fig. 7 im stegbildenden Abschnitt nun der erläuterte Spalt 1′ platzgreift.

Das gegenüber Fig. 11 noch einmal abgewandelte Webebild nach Fig. 12 sieht im Unterschied dazu eine lagenwechselnde Einbindung der Schußfäden 4 durch die äußeren Bindekettfäden 5 und die inneren Steherfäden 6 vor. Es sind jeweils unmittelbar benachbarte Lagen von Schußfäden 4 wechselweise gefaßt.

Auch machen die Webebilder gemäß Fig. 11 und 12 deutlich, daß die Wandungsdicken der Wandungen des Gewebesteges 3 dickengleich sind denen der Gewebeschenkel 2, wobei jedoch der übergreifende bzw. einander kämmend durchgreifende Übertritt der Fäden der Gewebeschenkel vorliegt.

## Ansprüche

1. Aus einem aus Schuß-, Kett- und Steherfäden (4 bzw. 5 bzw. 6) gebildeten Mehrlagengewebe bestehender Vor-Formling zur Herstellung faserverstärkter Kunststoff-Verbundkörper, welches Mehrlagengewebe einen zu den Enden hin offenen Spalt (1) besitzt zur Bildung zweier voneinander unabhängig umfaltbarer Gewebeschenkel (2), dadurch gekennzeichnet, daß der Spalt (1) durch Umtritt der Kettfäden (5) um mittelständige Schußfäden (4) eingewebt ist.

2. Vor-Formling, nach Anspruch 1, dadurch gekennzeichnet, daß im Bereich der Gewebeschenkel (2) die Schußfäden (4) jeweils doppellagig angeordnet sind oder aus doppelt so starkem bzw. den Erfordernissen entsprechend starkem Schußmaterial bestehen.

3. Vor-Formling, nach einem oder mehreren der vorhergehenden Ansprüche, dadurch gekennzeichnet, daß die Steherfäden (6) (Grundkettfäden) der linken Hälfte des Gewebesteges (3) im Ansatzbereich des Spaltes (1), auf die rechte Seite des Gewebesteges überwechselnd, in den rechten Gewebeschenkel (2) laufen und umgekehrt.

4. Vor-Formling, nach einem oder mehreren der vorhergehenden Ansprüche, dadurch gekennzeichnet, daß im Bereich des Gewebesteges (3) ebenfalls ein mittelständiger Spalt (1′) eingewebt ist, welcher beiderends verschlossen ist durch die vom Gewebeabschnitt der einen Seite auf den Gewebeabschnitt der jeweils anderen Seite umtretenden Kettfäden (Steher- oder Grundkettfäden) (6).

## Claims

1. A preform for producing fibre-reinforced synthetic material composite bodies, comprising a multilayer woven fabric formed of weft threads, warp threads and fixed threads (4 or 5 or 6), which multilayer woven fabric has a gap (1) open towards the ends for forming two woven fabric legs (2) which can be folded over independently from each other, characterised in that the gap (1) is woven-in by step-turning the warp threads (5) around centrally positioned weft threads (4).

2. Preform according to claim 1, characterised in that in the region of the woven fabric legs (2) the weft threads (4) are arranged in double layers respectively, or consist of weft material which is twice as strong or which has a strength appropriate to the requirements.

3. Preform according to one or more of the aforementioned claims, characterised in that the fixed threads (6) (base warp threads) of the left half of the woven fabric web (3) in the starting region of the gap (1) change over to the right side of the woven fabric web, running into the right woven fabric leg (2) and vice versa.

4. Preform according to one or more of the aforementioned claims, characterised in that in the region of the woven fabric web (3) there is also woven-in a centrally positioned gap (1') which is closed at both ends by the warp threads (fixed or base warp threads) (6) step-turning from the woven fabric section of one side to the woven fabric section of the other side respectively.

## Revendications

1. Pré-ébauche formée d'un tissu multicouche composé de fils de trame de chaîne et stationnaires (4, 5, 6) pour la réalisation d'un corps composite en matière synthétique renforcée par des fibres, ce tissu multicouche ayant une fente (1) ouverte vers les extrémités pour former deux branches tissées (2) qui peuvent être repliées indépendamment l'une de l'autre, tissu caractérisé en ce que la fente (1) est tissée par passage des fils de chaîne (5) autour des fils de trame (4) médians.

2. Pré-ébauche selon la revendication 1, caractérisée en ce qu'au niveau des branches tissées (2), les fils de trame (4) sont chaque fois en double couche ou sont réalisés en une matière ayant une épaisseur double ou correspondant aux exigences.

3. Pré-ébauche selon l'une ou plusieurs des revendications précédentes, caractérisée en ce que les fils stationnaires (6) (fils de chaîne de base) de la moitié gauche de l'âme tissée (3) passent dans la zone d'amorce de la fente (1) vers le côté droit de l'âme tissée, en alternance pour arriver dans la branche tissée droite (2) et inversement.

4. Pré-ébauche selon l'une ou plusieurs des revendications précédentes, caractérisée en ce que dans zone de l'âme (6 et 3), on réalise par tissage également une fente (1') médiane dont les deux extrémités sont fermées par des fils de chaîne passant du segment tissé d'un côté vers le segment tissé de l'autre côté (fils de chaîne de base ou fils stationnaires 6).

## FIG.1

## FIG.2

# FIG.3

# FIG.4

FIG.5

FIG.6

FIG.7

FIG. 8

FIG. 9

FIG. 10

## FIG. 11

# FIG. 12